# EUROPÄISCHE PATENTSCHRIFT

(11) **EP 0 738 879 B1**
(45) Veröffentlichungstag und Bekanntmachung des Hinweises auf die Patenterteilung: **06.10.1999**
(21) Anmeldenummer: 96100610.3
(22) Anmeldetag: 17.01.1996
(51) Int. Cl.: G01D 5/245

(54) **Drehwinkelmesssystem**
Angular measurement system
Système de mesure angulaire

(30) Priorität: 11.04.1995 DE 19513692
(43) Veröffentlichungstag der Anmeldung: 23.10.1996
(73) Patentinhaber: MAX STEGMANN GmbH ANTRIEBSTECHNIK - ELEKTRONIK, D-78166 Donaueschingen (DE)
(72) Erfinder: Siraky, Josef, D-78166 Donaueschingen (DE)
(74) Vertreter: Patentanwälte Westphal, Mussgnug & Partner

(56) Entgegenhaltungen:
- EP-A- 0 341 314
- WO-A-94/29673
- DE-C- 4 220 502
- NTIS TECH NOTES, 1.Februar 1990, SPRINGFIELD, VA, USA, Seite 161 XP000103872 P.R.CHRISTON ET AL: "RAPIDLY-INDEXING INCREMENTAL-ANGLE ENCODER"

## Beschreibung

Die Erfindung betrifft ein Drehwinkelmeßsystem zum Ermitteln der absoluten Winkelposition der Welle eines Elektromotors gemäß dem Oberbegriff des Anspruchs 1.

Um bei Servomotoren oder sonstigen elektromotorischen Antrieben eine genaue Winkelpositionierung und Synchronisation zu ermöglichen, muß die Winkelstellung und die Drehzahl der Welle des Elektromotors genau gesteuert werden. Hierzu werden Regelsysteme verwendet, bei welchen ein Drehwinkelmeßgerät die Winkelinformation für die Bestimmung der absoluten Winkelposition und der Drehzahl liefert.

Aus der DE 42 20 502 C1 ist hierzu ein Drehwinkelmeßsystem der eingangs genannten Gattung bekannt. Bei diesem Drehwinkelmeßsystem liefert das Drehwinkelmeßgerät mehrere Sinus-Cosinus-Signalpaare, deren Periodenzahl pro Umdrehung der Welle ganzzahlige Vielfache voneinander sind. Über einen analogen Prozeßdatenkanal gibt das Drehwinkelmeßgerät das Sinus-Cosinus-Signalpaar mit der höchsten Anzahl von Perioden pro Umdrehung an eine Steuereinheit, um eine inkrementale Winkelmeßgröße hoher Auflösung zu erhalten. Aus den Sinus-Cosinus-Signalpaaren mit den verschiedenen Periodenzahlen wird in dem Drehwinkelmeßgerät die jeweilige momentane Winkelposition mit hoher Genauigkeit als digitaler Wert gebildet, der über einen digitalen Parameterkanal an die Steuereinheit übertragen wird. Beim Einschalten des Systems wird der Absolutwert der Winkelposition über den Parameterkanal der Steuereinheit zugeführt, die dann von diesem Absolutwert ausgehend die Winkelposition inkremental entsprechend dem Sinus-Cosinus-Signal des Prozeßdatenkanals weiterzählt. Das inkrementale Signal des Prozeßdatenkanals dient auch zur Drehzahlbestimmung.

Dieses bekannte Drehwinkelmeßsystem liefert beim Einschalten sofort die absolute Winkelposition mit hoher Genauigkeit. Hierzu ist allerdings ein gewisser Aufwand erforderlich, um den digitalen Wert der absoluten Winkelposition aus den Sinus-Cosinus-Signalpaaren unterschiedlicher Periodenzahl zu bilden.

Weiter ist ein Drehwinkelmeßsystem bekannt (Drehgeber ERN der Firma Dr. Johannes Heidenhain GmbH), bei welchem das Drehwinkelmeßgerät über einen analogen Prozeßdatenkanal ein Sinus-Cosinus-Signalpaar mit einer hohen Anzahl von Perioden pro Umdrehung als inkrementale Winkelmeßgröße überträgt. In einem weiteren analogen Kanal wird ein Sinus-Cosinus-Signalpaar mit jeweils nur einer Periode pro Umdrehung zu der Steuereinheit übertragen. Aus diesem Sinus-Cosinus-Signal-paar wird die absolute Winkelposition mit geringer Genauigkeit bestimmt, wobei die Genauigkeit der absoluten Winkelposition jedoch ausreicht, um den Elektromotor phasenrichtig für den Anlauf anzusteuern. Schließlich weist das Drehwinkelmeßgerät eine Indexmarke auf, die einen absoluten Referenzwinkelwert darstellt. Wird bei der Drehung die Indexmarke erreicht, wird über einen weiteren Kanal ein Synchronsignal an die Steuereinheit abgegeben, durch welches der absolute Winkelwert geringer Genauigkeit zu einem absoluten Winkelwert hoher Genauigkeit für die weitere inkrementale Zählung korrigiert wird.

Dieses Drehwinkelmeßsystem benötigt eine Schnittstelle mit einer größeren Anzahl von Übertragungskanälen und damit einer höheren Störanfälligkeit. Außerdem ist die Schnittstelle nicht mit der Schnittstelle des Drehwinkelmeßgerätes des gattungsgemäßen Drehwinkelmeßsystems kompatibel.

Der Erfindung liegt die Aufgabe zugrunde, ein Drehwinkelmeßsystem zu schaffen, welches bei einfachem kostengünstigem Aufbau eine einfache Schnittstelle aufweist, die vorzugsweise mit der Schnittstelle des gattungsgemäßen Drehwinkelmeßsystems physikalisch kompatibel ist.

Diese Aufgabe wird erfindungsgemäß gelöst durch ein Drehwinkelmeßsystem mit den Merkmalen des Anspruchs 1.

Vorteilhafte Ausführungen der Erfindung sind in den abhängigen Ansprüchen angegeben.

Der wesentliche Gedanke der Erfindung besteht darin, ein Drehwinkelmeßgerät zu verwenden, welches zum einen ein Sinus-Cosinus-Signalpaar mit einer hohen Anzahl von Perioden pro Umdrehung als hochauflösenden inkrementalen Winkelwert, zum zweiten ein Sinus-Cosinus-Signalpaar mit einer oder einigen wenigen Perioden pro Umdrehung zur Ermittlung eines groben absoluten Winkelwertes für die Anlaufkommutierung des Elektromotors und zum dritten ein der einen oder den wenigen Perioden dieses Sinus-Cosinus-Signalpaares zugeordnetes Synchronsignal als absoluten Winkelwert hoher Genauigkeit liefert. Um die Schnittstelle zwischen dem Drehwinkelmeßgerät und der Steuereinheit in einfacher Weise mit nur einem analogen Prozeßdatenkanal und einem digitalen Parameterkanal ausbilden zu können, wird zunächst beim Einschalten von der Steuereinheit über den digitalen Parameterkanal das Sinus-Cosinus-Signalpaar zur Bestimmung der groben absoluten Winkelposition auf den analogen Prozeßdatenkanal geschaltet. Dadurch kann die absolute Winkelposition der Motorwelle mit einer Genauigkeit ermittelt werden, die für die Anlaufkommutierung des Motors ausreicht. Nach dem Anlaufen des Motors wird von der Steuereinheit über den digitalen Parameterkanal das hochauflösende Sinus-Cosinus-Signalpaar auf den analogen Prozeßdatenkanal geschaltet, so daß der von der Welle durchlaufene Drehwinkel inkremental mit hoher Auflösung gezählt werden kann. Wird bei der Motordrehung die Indexmarke des Drehwinkelmeßgeräts erreicht, so gibt das Drehwinkelmeßgerät über den digitalen Parameterkanal ein Synchronsignal an die Steuereinheit, welches den absoluten Winkelwert der Indexmarke mit hoher Genauigkeit zur Verfügung stellt, um den Anfangswert für die inkrementale Drehwinkelmessung zu korrigieren.

Das Drehwinkelmeßsystem bietet den Vorteil, daß eine Steuereinheit mit einer einfachen einen analogen Prozeßdatenkanal und einen digitalen Parameterkanal aufweisenden Schnittstelle verwendet werden kann, wie sie beispielsweise bei dem Drehwinkelmeßsystem gemäß der DE 42 20 502 C1 verwendet wird. Die Anpassung an das Drehwinkelmeßgerät des erfindungsgemäßen Systems erfolgt ausschließlich über die Software-Programmierung der Steuereinheit. Das Drehwinkelmeßgerät ist kostengünstig, da für die Bestimmung der absoluten Winkelposition mit hoher Genauigkeit eine Synchronisation mittels Indexmarken verwendet wird.

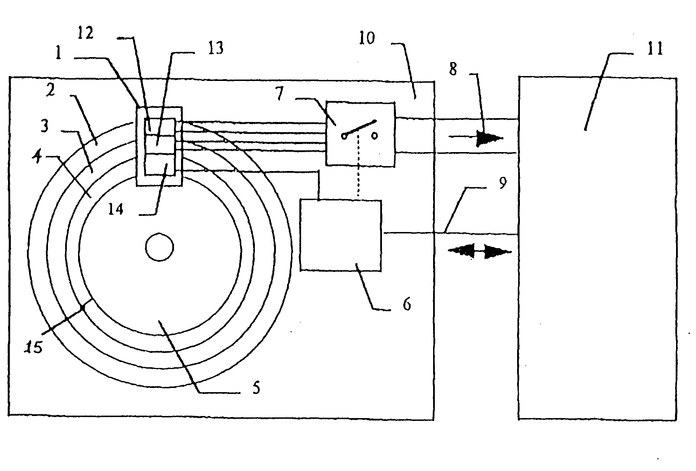

Im folgenden wird die Erfindung anhand eines in der Zeichnung dargestellten Ausführungsbeispiels näher erläutert. Die einzige Figur zeigt schematisch das Drehwinkelmeßsystem.

Das Drehwinkelmeßsystem besteht aus einem Drehwinkelmeßgerät 10 und einer Steuereinheit 11. Das Drehwinkelmeßgerät 10 und die Steuereinheit 11 sind über eine elektrische Schnittstelle miteinander verbunden, die einen Prozeßdatenkanal 8 als analogen Ausgang des Drehwinkelmeßgerätes 10 und einen Parameterkanal 9 als digitalen Ausgang und Eingang des Drehwinkelmeßgerätes 10 aufweist.

Das Drehwinkelmeßgerät 10 weist Maßverkörperungen auf einer Scheibe 5 auf, die direkt oder über ein Getriebe mit der Welle eines Elektromotors gekoppelt ist, deren Winkelposition und Drehzahl programmgesteuert geregelt werden sollen.

Die Scheibe 5 trägt vorzugsweise optisch abtastbare Spuren 2, 3 und 4, die durch entsprechende opto-elektronische Wandler 12, 13 und 14 einer Abtast-Einheit 1 abgetastet werden. Die Abtastung der Spur 2 liefert eine hochauflösende inkrementale Winkelinformation in Form eines Sinus-Cosinus-Signalpaares mit einer hohen Anzahl von Perioden pro Umdrehung der Scheibe 5. Die Abtastung der Spur 3 liefert ein Sinus-Cosinus-Signalpaar mit einer einzigen Periode pro Umdrehung der Scheibe 5. Die Spur 4 weist nur eine Indexmarke 15 in einer vorgegebenen Winkelposition auf, deren Abmessung in Umfangsrichtung kleiner ist als die Periodenlänge der Spur 2.

Die Sinus-Cosinus-Signalpaare der Spuren 2 und 3 werden über einen Umschalter 7 alternativ an den Prozeßdatenkanal 8 geschaltet und zu der Steuereinheit 11 übertragen. Das Synchronsignal der Spur 4 wird über eine Multiplex-Einheit 6 und den Parameterkanal 9 zu der Steuereinheit 11 geführt. In umgekehrter Richtung werden von der Steuereinheit 11 über den Parameterkanal 9 und die Multiplex-Einheit 6 Umschaltsignale zu dem Umschalter 7 geführt, die diesen Umschalter 7 betätigen.

Das Drehwinkelmeßsystem arbeitet als Rückmeldesystem für die Steuerung des Servomotors in folgender Weise:

Beim Einschalten des Systems schaltet die Steuereinheit 11 über den Parameterkanal 9 und die Multiplex-Einheit 6 den Umschalter 7 so, daß das Sinus-Cosinus-Signalpaar mit einer Periode pro Umdrehung der Spur 3 über den Prozeßdatenkanal 8 analog an die Steuereinheit 11 übertragen wird. Die Steuereinheit 11 ermittelt aus dem Sinus-Signal und dem Cosinus-Signal mit einer Periode pro Umdrehung die absolute Winkelposition der Scheibe 5 und damit der Welle des Motors. Die Genauigkeit dieser absoluten Winkelposition ist zwar nicht sehr hoch, aber ausreichend, um die Motorwicklungen phasenrichtig für den Anlauf des Motors zu bestromen.

Nach dieser Grobbestimmung der absoluten Winkelposition schaltet die Steuereinheit 11 wiederum über den Parameterkanal 9 und die Multiplex-Einheit 6 den Umschalter 7 so, daß nun das Sinus-Cosinus-Signalpaar mit der hohen Anzahl von Perioden pro Umdrehung der Spur 2 an den Prozeßdatenkanal 8 geschaltet und analog zur Steuereinheit 11 übertragen wird.

Die Steuereinheit 11 zählt entsprechend diesem Sinus-Cosinus-Signalpaar den Drehwinkel inkremental. Die analoge Übertragung der Sinus-Cosinus-Signale ermöglicht einen Übertragungskanal mit relativ geringer Bandbreite. Eine Spannungsdiskriminierung der Sinus-Cosinus-Signale in der Steuereinheit 11 ermöglicht zusätzlich eine weitere Feinunterteilung der Sinus-Cosinus-Perioden und damit eine weitere Erhöhung der Winkelauflösung. Die Verwendung von Sinus- und Cosinus-Signalen ermöglicht eine einfache Drehrichtungsdiskriminierung. Die inkrementale Winkelinformation dient zur Drehzahl-Bestimmung als Ist-Wert für die Drehzahlregelung des Motors. Die Winkelposition wird durch inkrementales Zählen des Drehwinkels von der anfangs grob bestimmten absoluten Winkelposition ermittelt.

Sobald bei der Drehung der Scheibe 5 die Indexmarke 15 der Spur 4 die Abtast-Einheit 1 erreicht, gibt der opto-elektronische Wandler 14 ein Synchronsignal über die Multiplex-Einheit 6 und den digitalen Parameterkanal 9 zu der Steuereinheit 11. Die Winkelauflösung des Synchronsignals der Indexmarke 15 ist kleiner als die Periodenlänge des Sinus-Cosinus-Signalpaares der hochauflösenden Spur 2, so daß die durch die Indexmarke 15 gegebene absolute Winkelposition eindeutig einer Periode des Sinus-Cosinus-Signalpaares der Spur 2 zugeordnet werden kann. Die Steuereinheit 11 korrigiert auf diese Weise den zunächst von der anfangs ungenau bestimmten absoluten Winkelposition inkremental gezählten Winkelwert auf einen auf die Indexmarke 15 bezogenen absoluten Winkelwert der hohen Genauigkeit, die mittels der hochauflösenden Spur 2 erzielt wird.

Neben den Umschaltsignalen für den Umschalter 7 und dem Synchronsignal der Indexmarke 15 lassen sich über den digitalen Parameterkanal 9 auch andere Informationen wie Motorwicklungstemperaturen, Motorkenndaten und logistische Informationen lesen und speichern.

Bei der beschriebenen Ausführung mit einem Sinus-Cosinus-Signalpaar mit einer Periode pro Umdrehung in der Spur 3 und einer Indexmarke 15 in der Spur 4 erfolgt die Synchronisierung des absoluten Winkelwertes beim Anlaufen spätestens nach einer Umdrehung der Scheibe 5. Weist der Elektromotor mehr als ein Polpaar auf, so kann die Spur 3 auch entsprechend mehrere Perioden des Sinus-Cosinus-Signalpaares pro Umdrehung erzeugen, wobei die Spur 4 auch eine dieser Anzahl von Perioden entsprechende Anzahl von Indexmarken 15 aufweist. Bei einer größeren Anzahl von Polpaaren des Elektromotors kann schließlich die Anzahl der Perioden pro Umdrehung des Sinus-Cosinus-Signalpaares der Spur 3 und die entsprechende Anzahl der Indexmarken 15 der Spur 4 einem ganzzahligen Teiler der Anzahl der Polpaare des Motors entsprechen. In allen Fällen ist eine absolute Bestimmung der Winkelposition beim Anlaufen mit hinreichender Genauigkeit für die Kommutierung des Motors und eine anschließende Korrektur dieses groben absoluten Winkelwertes durch die Indexmarken 15 möglich.

## Patentansprüche

1. Drehwinkelmeßsystem zum Ermitteln der absoluten Winkelposition der Welle eines Elektromotors, mit einem Drehwinkelmeßgerät (10), welches über eine elektrische Schnittstelle (8, 9) an eine Steuereinheit (11) anschließbar ist, wobei das Drehwinkelmeßgerät (10) über einen analogen Prozeßdatenkanal (8) der Schnittstelle ein von dem Drehwinkel abhängiges Sinus-Cosinus-Signalpaar mit einer hohen Anzahl von Perioden pro Umdrehung zu der Steuereinheit (11) für die Motorsteuerung überträgt und wobei über einen digitalen Parameterkanal (9) der Schnittstelle eine eine Referenz-Winkelposition mit hoher Genauigkeit wiedergebene Information von dem Drehwinkelmeßgerät (10) zu der Steuereinheit (11) und weitere Informationen in beiden Richtungen zwischen dem Drehwinkelmeßgerät (10) und der Steuereinheit (11) übertragen werden, dadurch gekennzeichnet, daß die Steuereinheit (11) so programmiert ist, daß zunächst von der Steuereinheit (11) über den Parameterkanal (9) gesteuert ein Sinus-Cosinus-Signalpaar mit einer höchstens der Anzahl der Polpaare des Elektromotors entsprechenden Anzahl von Perioden pro Umdrehung des Drehwinkelmeßgerätes (10) auf den Prozeßdatenkanal (8) geschaltet wird, daß aus diesem Sinus-Cosinus-Signalpaar die absolute Winkelposition mit für die Anlaufkommutierung des Elektromotors hinreichender Genauigkeit bestimmt wird, daß darauf von der Steuereinheit (11) über den Parameterkanal (9) gesteuert das Sinus-Cosinus-Signalpaar des Drehwinkelmeßgerätes (10) mit der hohen Anzahl von Perioden auf den Prozeßdatenkanal (8) geschaltet wird und daß durch Indexmarken (15) des Drehwinkelmeßgerätes (10), deren Anzahl der Anzahl der Perioden des Sinus-Cosinus-Signalpaares für die anfängliche Bestimmung der absoluten Winkelposition entspricht, ein Synchronsignal erzeugt wird, welches über den Parameterkanal (9) zur Steuereinheit (11) übertragen wird und in dieser zur Korrektur des anfänglich bestimmten absoluten Winkelpositionswertes dient.

2. Winkelmeßsystem nach Anspruch 1, dadurch gekennzeichnet, daß das Sinus-Cosinus-Signalpaar für die anfängliche Bestimmung der absoluten Winkelposition eine Periode pro Umdrehung aufweist.

3. Drehwinkelmeßsystem nach Anspruch 1, dadurch gekennzeichnet, daß die Anzahl der Perioden pro Umdrehung des Sinus-Cosinus-Signalpaares für die anfängliche Bestimmung der absoluten Winkelposition einem ganzzahligen Teiler der Anzahl der Polpaare des Elektromotors entspricht.

4. Drehwinkelmeßsystem nach einem der vorhergehenden Ansprüche, dadurch gekennzeichnet, daß das Drehwinkelmeßgerät (10) eine Multiplex-Einheit (6) aufweist, über die das Synchronsignal zu dem Parameterkanal (9) geführt wird und über die die Steuereinheit (11) einen Umschalter (7) des Prozeßdatenkanals (8) betätigt.

## Claims

1. An angle of rotation measurement system for determining the absolute angular position of the shaft of an electric motor, having an angle of rotation measuring instrument (10), which can be connected via an electrical interface (8, 9) to a control unit (11), wherein the angle of rotation measuring instrument (10) transmits, via an analog process data channel (8) of the interface, a pair of sine-cosine signals dependent on the angle of rotation and having a large number of periods per revolution to the control unit (11) for the motor control and wherein via a digital parameter channel (9) of the interface an item of information reproducing a reference angular position with high accuracy is transmitted from the angle of rotation measuring instrument (10) to the control unit (11) and further items of information are transmitted in both directions between the angle of rotation measuring instrument (10) and the control unit (11), **characterised in that** the control unit (11) is programmed so that, firstly controlled by the control unit (11) via the parameter channel (9), a pair of sine-cosine signals having a number of periods per revolution of the angle of rotation measuring instrument (10) which corresponds at most to the number of pairs of poles of the electric motor is switched to the process data channel (8), **in that** from this pair of sine-cosine signals the absolute angular position is determined with sufficient accuracy for the start-up commutation of the electric motor,
**in that** thereupon, controlled by the control unit (11) via the parameter channel (9), the pair of sine-cosine signals of the angle of rotation measuring instrument (10) with the high number of periods is switched to the process data channel (8), **and in that** produced by index marks (15) of the angle of rotation measuring instrument (1), the number of which corresponds to the number of periods of the pair of sine-cosine signals for the initial determination of the absolute angular position, is a synchronising signal, which is transmitted via the parameter channel (9) to the control unit (11) and therein serves to correct the initially determined absolute angular position.

2. An angle of rotation measurement system according to Claim 1,
**characterised in that** the pair of sine-cosine signals for the initial determination of the absolute angular position has one period for each revolution.

3. An angle of rotation measurement system according to Claim 1,
**characterised in that** the number of periods for each revolution of the pair of sine-cosine signals for the initial determination of the absolute angular position corresponds to a integral divisor of the number of the pairs of poles of the electric motor.

4. An angle of rotation measurement system according to one of the preceding Claims,
**characterised in that** the angle of rotation measuring instrument (10) has a multiplex unit (6), via which the synchronising signal is conveyed to the parameter channel (9) and via which the control unit (11) actuates a changeover device (7) of the process data channel (8).

## Revendications

1. Système de mesure d'angle de rotation servant à déterminer la position angulaire absolue de l'arbre d'un moteur électrique, comprenant un appareil de mesure d'angles de rotation (10) qui peut être raccordé par l'intermédiaire d'une interface électrique (8, 9), l'appareil de mesure d'angles de rotation (10) transmettant, par l'intermédiaire d'un canal analogique de données (8) des opérations de l'interface, une paire de signaux de sinus et de cosinus qui est fonction de l'angle de rotation, avec un nombre élevé de périodes par révolution, à l'unité de commande (11) pour la commande du moteur, et par l'intermédiaire d'un canal numérique de paramètres (9) de l'interface une information reproduisant une position angulaire de référence avec une précision élevée étant transmise par l'appareil de mesure d'angles de rotation (10) à l'unité de commande (11) et d'autres informations étant transmises dans les deux sens entre l'appareil de mesure d'angles de rotation (10) et l'unité de commande (11),
caractérisé en ce que
• l'unité de commande (11) est programmée de telle façon que l'on branche tout d'abord sur le canal de données (8) des opérations une paire de signaux de sinus et de cosinus, commandée par l'unité de commande (11) par l'intermédiaire du canal de paramètres (9), avec un nombre de périodes par révolution de l'appareil de mesure d'angles de rotation (10) qui correspond au plus au nombre des paires de pôles du moteur électrique sur le canal de données des opérations (8),
• on détermine à partir de cette paire de signaux de sinus et de cosinus la position angulaire absolue avec une précision suffisante pour la commutation de démarrage du moteur électrique,
• l'on branche ensuite sur le canal de données des opérations (8) la paire de signaux de sinus et de cosinus de l'appareil de mesure d'angles de rotation (10), commandée par l'unité de commande (11) par l'intermédiaire du canal de paramètres (9) avec le nombre élevé de périodes sur le canal de données des opérations (8), et
• on produit un signal de synchronisation par les repères d'index (15) de l'appareil de mesure d'angles de rotation (10), dont le nombre correspond au nombre des périodes de la paire de signaux de sinus et de cosinus pour la détermination initiale de la position angulaire absolue, signal de synchronisation qui est transmis par l'intermédiaire du canal de paramètres (9) à l'unité de commande (11) et sert dans celle-ci à corriger la valeur angulaire absolue initialement déterminée.

2. Système de mesure d'angle selon la revendication 1,
caractérisé en ce que
la paire de signaux de sinus et de cosinus pour la détermination initiale de la position angulaire absolue présente une seule période par révolution.

3. Système de mesure d'angle selon la revendication 1,
caractérisé en ce que
le nombre des périodes par révolution de la paire de signaux de sinus et de cosinus pour la détermination initiale de la position angulaire absolue correspond à un diviseur entier du nombre des paires de pôles du moteur électrique.

4. Système de mesure d'angle selon l'une des revendications précédentes,
caractérisé en ce que
l'appareil de mesure d'angles de rotation (10) présente une unité multiplex (6), au moyen de laquelle le signal de synchronisation est amené au canal de paramètres (9) et au moyen de laquelle l'unité de commande (11) actionne un commutateur (7) du canal de données des opérations (8).
